# FASCICULE DE BREVET EUROPEEN

(11) **EP 2 571 823 B1**
(45) Date de publication et mention de la délivrance du brevet: **06.04.2016**
(21) Numéro de dépôt: 11726882.1
(22) Date de dépôt: 18.05.2011
(51) Int. Cl.: C03B 23/035

(54) **FORME DE BOMBAGE ALVEOLAIRE**
ALVEOLÄRE BIEGEFORM
CELLULAR BENDING MOULD

(30) Priorité: 19.05.2010 FR 1053859
(43) Date de publication de la demande: 27.03.2013
(73) Titulaire: Saint-Gobain Glass France, 92400 Courbevoie (FR)
(72) Inventeur: THELLIER, Hervé, F-60170 Pimprez (FR); MACHURA, Christophe, F-60150 Chevincourt (FR); LAGNEAUX, Robert, F-60350 Attichy (FR); THEPOT, Romain, F-45500 Gien (FR)
(74) Mandataire: Colombier, Christian
(86) Numéro de dépôt international: PCT/FR2011/051121
(87) Numéro de publication internationale: WO 2011/144865

(56) Documents cités:
- DE-U- 7 537 280
- US-A- 3 457 055
- US-A- 3 756 797
- US-A- 4 501 603
- US-A- 4 690 319
- US-A- 5 259 859
- US-A- 5 906 667
- US-B1- 6 318 125

## Description

L'invention concerne un outil à faible capacité calorifique pour le bombage de feuilles de verre dans le cadre de l'élaboration de verre trempé ou feuilleté. L'outil selon l'invention peut servir au bombage de feuilles de verres individuellement, ou de plusieurs feuilles de verre superposées, généralement deux.

De nombreux procédés de bombage sont connus comme le bombage par gravité, le bombage par aspiration, le bombage par pressage, le bombage entre convoyeurs à rouleaux. Les outils de bombage ont toujours un contact plus ou moins important avec le verre à bomber ce qui conduit généralement à des échanges thermiques. En effet, l'outil de bombage n'a jamais exactement la température que le verre. Selon le cas, cet échange thermique peut induire au moins l'un des problèmes suivants :
- le verre peut se voir refroidi par l'outil de bombage à un endroit ou l'on cherche un fort bombage, ce qui peut conduire à des distorsions optiques locales et même à des casses ;
- la température de l'outil de bombage peut évoluer avec le temps (sous l'effet du contact répété avec des feuilles de verre à une température différente), ce qui rend difficile les réglages et conduit à des lots inhomogènes ;
- l'échange thermique doit être compensé par un apport thermique supplémentaire, ce qui engendre des coûts (installations supplémentaires et énergie supplémentaire) ;

Ces problèmes peuvent survenir pour les procédés de bombage dont les outils sont dans des fours, ou pour les procédés de bombage dont les outils ne sont pas dans des fours.

L'invention résout les problèmes susmentionnés. On a maintenant eu l'idée de fabriquer et d'utiliser pour le bombage un outil à très faible densité pour réduire sa capacité calorifique et sa conductibilité thermique et le rendre plus neutre thermiquement vis-à-vis du verre à bomber. Cette faible densité est créée par des alvéoles. Par alvéole, on entend une cavité dans une matière solide et ce terme est équivalent à poche ou orifice ou lacune ou espace libre. L'alvéole est vide ou remplie d'un gaz, à pression atmosphérique ou à pression inférieure ou supérieure à la pression atmosphérique. Ce gaz est généralement de l'air. Les alvéoles débouchent à la surface de formage de la forme, réduisant d'autant la surface de contact réel. Les échanges thermiques entre la forme et le verre en sont fortement réduits.

Le US2007/157671 enseigne un procédé de bombage à l'aide d'une forme pleine, l'intérieur de la forme pleine pouvant être compartimenté pour exercer une aspiration ou un soufflage au travers de sa surface de formage. Comme autres document décrivant le bombage par des formes pleines, on peut citer les US2007/144211, US5769919, US5669952, US3778244.

Le US5259859 enseigne un pick-up pour tenir une feuille de verre par aspiration, ledit pick-up comprenant un nid d'abeille formant des alvéoles, deux matériaux fibreux se trouvant entre la feuille de verre et la surface du nid d'abeille.

L'outil, de bombage (ou forme de bombage) selon l'invention comprend un matériau solide et des alvéoles.

La nature du matériau solide est choisie en fonction du type de procédé de bombage utilisé.

La forme de bombage selon l'invention peut ne pas être dans un four. Si elle n'est pas placé dans un four mais se trouve à l'air ambiant et si le bombage appliqué aux feuilles de verre présente de relativement modestes courbures, le matériau peut comprendre un polymère organique, éventuellement chargé en fibres ou particules, comme par exemple une résine thermodurcissable chargée en fibres de verre. Pour ce type de bombage, on peut naturellement choisir des matériaux avec des tenues thermiques supérieures comme l'aluminium ou l'acier inoxydable.

Si l'outil de bombage n'est pas placé dans un four mais se trouve à l'air ambiant, et si le bombage appliqué aux feuilles de verre présente de relativement fortes courbures, le matériau peut être en aluminium. Pour ce type de bombage, on peut naturellement choisir des matériaux avec des tenues thermiques supérieures comme l'acier inoxydable.

Si l'outil de bombage est placé dans un four (dont l'ambiance est généralement entre 550 à 700°C), le matériau peut être en acier inoxydable. Le cas échéant, la forme selon l'invention peut être refroidie ou chauffée selon le procédé de bombage utilisé. Pour refroidir ou chauffer l'outil, on peut notamment se rapporter aux techniques décrites dans US2010/0050694.

Selon le procédé de bombage utilisé et le fait que la forme soit refroidie ou chauffée en cours de fonctionnement, la forme peut avoir, en régime permanent, une température comprise entre 50 et 700°C et l'on choisit le matériau solide en fonction de cette température.

Dans tous les cas, la feuille de verre elle-même est à une température comprise entre 580 et 650°C pendant le bombage.

Le matériau solide peut être métallique comme en acier inoxydable, par exemple en inox 316. L'acier inoxydable est peu onéreux, facile à souder, facile à usiner, résiste aux températures de bombage, et est suffisamment résistant sur le plan mécanique.

La forme de bombage comprend un assemblage de tôles métalliques. La tôle peut par exemple être d'épaisseur dans le domaine allant de 0,01 à 1 mm, notamment de 0,02 à 0,6 mm. Plus la tôle est fine, plus on parvient à augmenter le taux volumique des alvéoles de la forme. L'assemblage est non-compact, ce qui signifie que des alvéoles sont ménagés entre différents points de contact des tôles. A titre d'exemple, on peut utiliser de la tôle ondulée. Cette tôle ondulée peut être combinée au sein de l'assemblage avec de la tôle plane, comme on fait du carton d'emballage. De la tôle ondulée peut être fabriquée par passage de tôle plane dans un engrenage formé de rouleaux dentés. L'amplitude de l'ondulation de la tôle peut être choisie dans le domaine allant de 1 à 40 mm, notamment de 2 à 15 mm et même de 3 à 9 mm.

On peut utiliser de la tôle plus épaisse que 0,5 mm pouvant même aller jusqu'à 8 mm d'épaisseur. Généralement, ce type de tôle plus épaisse (ou plaque) est destinée aux formes de bombage pleines dont les alvéoles sont particulièrement importantes (aire des alvéoles supérieures à 2 cm², notamment entre 2 et 40 cm²) et pour des bombages aux courbures peu prononcés et/ou le bombage de feuilles de verre relativement épaisses (comme 3 à 5 mm d'épaisseur). Pour ces tôles épaisses (0,5 à 8 mm d'épaisseur), on peut les utiliser planes et les assembler selon deux groupes orthogonaux formant un quadrillage à la surface de formage.

Selon le cas, la tôle peut donc avoir une épaisseur dans le domaine de 0,01 à 8 mm.

Plus la température du verre à bomber est élevée, plus on choisira une géométrie d'alvéole formant une petite section à la surface de formage. En effet, si la section d'alvéoles à la surface de formage est petite, cela implique plus de répartition du matériau solide en surface de formage par unité de surface. Le verre étant plus mou à plus haute température, cette plus forte répartition (ou plus fin maillage) réduit le marquage du verre. De même, plus le verre doit être fortement courbé, plus on choisira une petite section d'alvéole à la surface de formage. En effet, de fortes courbures nécessitent des forces de pressage plus fortes et un fin réseau de matériau solide à la surface de formage réduit la tendance au marquage. Un plus fin maillage de matériau solide à la surface de formage multiplie les points de contact ce qui conduit à une meilleur répartition de la pression de bombage, c'est-à-dire la pression exercée par la forme de bombage sur le verre. Le moyen utilisé pour exercer cette pression peut être de nature pneumatique ou mécanique. Le moyen est pneumatique si la pression vient d'une aspiration au travers des alvéoles de la forme selon l'invention ou grâce à une jupe entourant la forme selon l'invention et provoquant une aspiration autour de cette forme, ou par un soufflage d'air sur le verre pour le pousser contre la forme. Le moyen est mécanique si une contreforme solide vient presser le verre contre la forme selon l'invention. Cette contreforme peut être du type cadre (« ring » en anglais) de sorte qu'elle ne vient presser que la périphérie du verre, ou être une forme pleine, c'est-à-dire s'appliquant non seulement à la périphérie du verre mais aussi à l'ensemble de la surface du verre et notamment à sa région centrale.

La température du verre au moment du bombage est suffisamment faible pour que le réseau de matériau solide (en général métallique) entourant les alvéoles de la surface de bombage ne laisse pas de marque dans le verre. Le verre ne rentre donc pas dans les alvéoles (ou cavités) au moment du bombage. La forme de bombage selon l'invention est notamment destinée au bombage de feuilles de verre présentant un seul type de concavité sur chacune de ses faces principales (une feuille de verre comprend deux faces principales), c'est-à-dire sans changement de concavité sur la même face principale, c'est-à-dire soit partout concave soit partout convexe sur chaque face. Dans ce cas, la surface de formage (et donc chaque face principale de la feuille bombée finale) présente un seul type de concavité. La forme de bombage selon l'invention peut aussi servir au bombage de feuilles de verre présentant quelques changements de concavité sur une face principale, comme c'est le cas de vitrages présentant une forme en S. Dans ce cas, la forme du vitrage est par exemple tel que n'importe quelle ligne le traversant sur une surface principale présente au plus 4, voire au plus 6 changements de concavité. Dans ce cas, la surface de formage (et donc chaque face principale de la feuille bombée finale) présente au plus 4, voire au plus 6 changements de concavité. Si une ligne A traversant la feuille de verre sur une de ses surfaces principale présente au moins 2 points d'inflexion P1 et P2 (un point d'inflexion correspondant à un point de changement de concavité), alors la ligne B sur la forme de bombage selon l'invention en vis-à-vis de la ligne A sur la feuille (les lignes A et B ont la même forme et sont situées de part et d'autre de la feuille de verre) traverse généralement au moins dix cavités de la forme de bombage entre les points P3 et P4 situés en vis-à-vis respectivement des points P1 et P2. C'est dans ce contexte que l'on peut dire que la surface de formage présente au plus six changements de concavité et de préférence au plus quatre changement de concavité et chaque face principale de la feuille de verre bombée finale présente au plus six changements de concavité et de préférence au plus quatre changement de concavité.

La forme de bombage du verre selon l'invention comprend un matériau solide alvéolaire dont les alvéoles forment des cavités à la surface de formage, lesdites alvéoles représentant plus de 40% du volume du matériau.

Ce matériau est généralement métallique et peut comprendre un métal courant, notamment l'inox 316, dès lors qu'on lui associe de la porosité pour former les alvéoles. La surface de formage est donc hétérogène : sa rigidité est donnée par le matériau solide mais ce matériau solide entoure une multitude de cavités. Cet assemblage de matériau solide et de cavités se retrouve à la surface de formage. Ainsi, la surface de formage est constituée d'un réseau continu de matière solide entourant des espaces exempts de toute matière condensée (solide ou liquide). Une telle surface de formage présente une surface réelle de matériau solide beaucoup plus faible que si elle était exclusivement en matériau solide, ce qui réduit d'autant les transferts de chaleur entre le verre à bomber et la forme. Ainsi, l'aire effective de matériau solide dans la surface de formage peut-elle être inférieure à 60% de l'aire de la surface de formage et même inférieure à 30% de l'aire de la surface de formage. Le reste de cette surface correspond aux cavités des alvéoles et n'est rempli d'aucune matière condensée (ni solide ni liquide dans les alvéoles). Il est préférable que le matériau solide soit assez bien réparti au travers de la surface en formant un réseau (ou maillage) relativement fin pour éviter des hétérogénéités trop fortes. Notamment, des cavités trop grosses risqueraient d'entraîner un marquage du verre. Ainsi, de préférence, aucun cercle de rayon supérieur à 1 cm et de manière encore préférée de rayon supérieur à 0,5 cm dans la surface de formage du matériau alvéolaire ne devrait être exempt de matériau solide. La surface de formage est celle donnant sa forme au verre, étant entendu que généralement, un matériau fibreux souple dit intercalaire, est fixé sur cette surface de formage pour venir en contact avec le verre. Ce matériau fibreux est en fibres réfractaires (tenant aux températures de bombage) comme en métal ou céramique réfractaire. Ce matériau fibreux peut être un non-tissé ou tissé comme un feutre, tissu, tricot. Ses fibres peuvent par exemple être en inox 316L ou 347. Elles peuvent par exemple avoir un diamètre compris entre 7 et 21 µm. Ce matériau fibreux est bien connu de l'homme du métier. Il atténue le marquage du verre par la forme de bombage. Il est très souple et perméable aux gaz. Son épaisseur est généralement inférieure à 3 mm et va généralement de 0,3 à 1,5 mm. Ainsi, l'invention concerne également un procédé de bombage de verre à sa température de bombage avec la forme selon l'invention, un tissu ou non-tissé comprenant une fibre réfractaire étant le cas échéant en position intercalaire entre le verre et la surface de formage.

La densité surfacique des cavités à la surface de formage reflète la densité volumique des alvéoles à l'intérieur de la forme. Les cavités représentent plus de 40% de la surface de formage du matériau alvéolaire. Si les alvéoles représentent plus de 70% du volume du matériau alvéolaire, les cavités représentent plus de 70% de la surface de formage du matériau alvéolaire. La surface de formage du matériau alvéolaire représente généralement plus de 70% et même plus de 90% de la surface de formage totale.

Le matériau solide utilisé pour la surface de formage peut être en métal et fait d'un assemblage de tôles métalliques. Cet assemblage est non-compact de façon à former les alvéoles. Cet assemblage conduit au sein de la forme à une alternance de solide et de vide, cette alternance se retrouvant de préférence à la surface de formage. Ainsi, la surface de formage peut comprendre une multiplicité de tranches de tôles métalliques.

Pour créer ces alvéoles au sein d'une forme selon l'invention faisant appel à un matériau métallique, on peut combiner des tôles métalliques de formes différentes de façon à ce qu'elles ne puissent former un bloc métallique compact (sans alvéole). Notamment, le matériau métallique peut comprendre une alternance de tôles ondulées et de tôles planes. On peut aussi empiler des tôles ondulées mais présentant des pas d'ondulation différents de façon à ce qu'elles ne puissent pas s'emboîter de façon compacte. De préférence, les tôles utilisées sont soudées (notamment soudées par points) ou brasées entre elles ou liées par tout autre moyen, ce qui confère de la rigidité à la forme et en particulier sa surface de formage. On peut envisager un collage pour réaliser cette liaison dès lors que la colle est compatible avec la température de la forme en conditions d'utilisation.

Le matériau solide peut former un réseau à la surface de formage entourant des cavités correspondant aux alvéoles. Par cavité, on entend une zone de la surface de formage correspondant à une alvéole et entièrement entourée de matériau solide. C'est l'intersection d'une alvéole avec la surface de formage. Comme déjà dit, ce réseau de matériau solide doit être suffisamment fin pour que le verre ne soit pas marqué. Notamment, la surface de formage peut être telle que le cercle de rayon 10 cm compris dans cette surface de formage et centrée au centre de ladite surface de formage contient au moins 100 cavités. Le centre de la surface de formage est le point le plus éloigné de tout le bord de la forme. Si C est le centre de la surface de formage et D est la plus petite distance entre C et le bord de la forme, alors il n'existe pas à la fois
- un autre point C' de la surface de formage, et
- un point P du bord de la forme,
tels que la distance C'P soit plus petite que D.

Les alvéoles de la forme de bombage peuvent avoir des formes très diverses selon la forme du métal utilisé. Notamment, les alvéoles peuvent avoir la forme de conduits rectilignes ou non. Ces conduits traversent la forme de bombage dans une direction sensiblement perpendiculaire à la surface de formage. Les conduits peuvent avoir une forme tubulaire. Les alvéoles peuvent avoir une forme de conduits rectilignes lorsqu'on utilise de la tôle ondulée. En effet, si l'on juxtapose une tôle ondulée et une tôle plane, chaque ondulation forme un conduit rectiligne. La direction longitudinale de ces conduits est parallèle aux tôles assemblées et est sensiblement orthogonale à la surface de formage (cette orthogonalité n'est bien entendu pas exacte car la surface de formage est bombée). Il est possible d'utiliser ces conduits pour souffler ou aspirer un gaz agissant sur le verre au travers de la forme de bombage. Ces conduits peuvent être étanches latéralement, c'est-à-dire qu'ils n'ont que deux ouvertures, l'une dans la face de formage et l'autre du côté du matériau alvéolaire de la forme opposé à la face de formage. On peut profiter pleinement de ces conduits rectilignes étanches latéralement pour créer des régions indépendantes d'aspiration ou de soufflage simplement en partitionnant (ou compartimentant) le côté de la forme de bombage opposé à la surface de formage. Ce partitionnement est associé à des caissons de soufflage ou d'aspiration indépendants reliés à la forme de bombage du côté opposé à la surface de formage. On peut avoir deux ou trois tels caissons et régions, voire plus. On réalise un tel partitionnement plutôt pour les formes de bombage dites « pleines », étant entendu que cet adjectif caractérise l'étendue de la surface de formage, laquelle agit sur l'essentiel de la surface du verre et en particulier la région centrale, par opposition avec une forme de bombage du type cadre qui n'agit qu'à la périphérie de la feuille de verre. Ainsi, l'invention concerne également un dispositif de bombage de feuilles de verre comprenant la forme de bombage selon l'invention, le côté opposé à la surface de formage du matériau solide alvéolaire étant compartimenté en différentes régions, et un caisson indépendant d'aspiration ou de soufflage étant relié à chaque région pour communiquer une pression aux alvéoles en forme de conduit débouchant dans ladite région.

La forme de bombage selon l'invention est une forme pleine. L'invention présente en effet un grand intérêt pour les formes pleines car le problème du transfert thermique se pose tout particulièrement avec ce type de forme. Pour l'homme du métier, une forme pleine (convexe ou concave, voire combinant de la concavité et de la convexité) est sans aucune ambigüité une forme qui vient au contact avec la plus grande partie (au moins 80% et même au moins 90%) de la surface du verre, et en particulier la zone centrale de ce verre. Les squelettes et cadres de bombage ne sont pas des formes pleines puisque ce sont des formes du type anneau.

L'invention concerne également le procédé de bombage de verre à sa température de bombage avec la forme selon l'invention, un intercalaire en matériau fibreux habillant généralement ladite forme. Le procédé selon l'invention peut être tel qu'une aspiration ou un soufflage soit exercé au travers de ces alvéoles. Après bombage, le verre bombé peut être refroidi naturellement ou plus rapidement, jusqu'à être trempé. Plus on veut renforcer le verre par trempage, plus on le chauffe lors du bombage. On diminue l'inertie thermique de la forme en diminuant l'épaisseur des tôles la constituant car cela permet d'augmenter le volume total des alvéoles. Plus le verre doit être chaud, notamment en vue d'être trempé, plus on a intérêt à diminuer la section des alvéoles à la surface de formage.

L'invention concerne également un procédé de fabrication d'une forme de bombage selon l'invention dans le cas où l'on procède à un assemblage de tôles métalliques. Selon un mode de réalisation, les tôles métalliques ont des formes différentes et sont disposées parallèlement les unes aux autres pour former un bloc alvéolaire puis on procède à l'usinage de la surface de formage sur le bloc, ladite surface étant disposée sensiblement perpendiculairement aux tôles métalliques. Bien entendu, quand on dit que les tôles sont disposées parallèlement les unes aux autres, il s'agit de leurs directions générales qui sont parallèles. En effet, comme elles sont de formes différentes, elles ne peuvent pas être parallèles en touts points de leurs surfaces. Le procédé de fabrication de cette forme passe par la juxtaposition de tôles métalliques de formes différentes de façon à créer des alvéoles. Le matériau métallique peut comprendre un assemblage alterné de tôles ondulées et de tôles planes. On peut donc juxtaposer de façon alternée une tôle ondulée et une tôle plane, puis de nouveau une tôle ondulé et une tôle plane, etc. Toutes ces tôles sont orientées identiquement et sont donc parallèles. On forme ainsi un parallélépipède. Les tôles sont ensuite maintenues solidairement par une ceinture périphérique métallique. On fait ensuite couler du matériau d'étamage fondu (dans un four) le long des contacts linéiques entre les tôles pour les assembler par brasage. Cette opération peut se faire dans un four sous vide à l'abri de l'oxygène. On découpe ensuite le bloc brasé, par exemple au fil par la technique d'électroérosion ou à la meule ou à la scie ou tout autre moyen d'usinage approprié pour lui donner son contour latéral (côté de la forme de bombage sensiblement orthogonale à la surface de formage). On muni ensuite le bloc d'une ceinture métallique préparée séparément, pour recouvrir les côtés latéraux du bloc. On procède ensuite à l'usinage de la surface de formage. Cet usinage peut être réalisé par des machines automatique du type 3 ou 5 axes. Afin d'éviter que les tôles ne se couchent et que les alvéoles ne se bouchent ni ne se remplissent de copeaux métalliques pendant l'opération d'usinage, de préférence, on remplit au moins les alvéoles débouchant à la surface de formage par de la résine. De préférence, la résine est thermofusible. Elle est de préférence suffisamment rigide pour empêcher les tôles de se coucher pendant l'usinage. Ce remplissage s'effectue par trempage à chaud dans la résine thermofusible liquide, suivi d'un refroidissement provoquant la solidification de la résine. On procède alors à l'usinage de la surface de formage sans déformer les alvéoles à la surface de formage. On sable ensuite pour enlever les bavures. On chauffe ensuite la forme pour liquéfier la résine thermofusible et l'enlever de la forme. Les résidus de résine peuvent être brulés ou évaporés par chauffage dans un four. L'usage d'une résine thermodurcissable à la place de la résine thermofusible n'est pas exclu mais son élimination est difficile et plus onéreuse. On pourrait brûler une résine thermodurcissable.

Au lieu de fabriquer la forme par le procédé ci-dessus décrit, on peut aussi commencer par la découpe des tôles individuellement l'une après l'autre, ou deux par deux, puis on enserre ces tôles découpées par une ceinture métallique ayant la forme adaptée à la celle de la forme finale, ladite ceinture maintenant les tôles par les côtés latéraux de la forme. On étame et usine ensuite l'ensemble comme décrit dans le procédé précédent.

Selon un autre mode de réalisation, on peut construire une forme de bombage par assemblage de tôles planes en forme de peigne comprenant des encoches. Ce procédé comprend l'assemblage de tôles métalliques planes, chaque tôle étant en forme de peigne comprenant des encoches parallèles entre elles et entaillant le même bord de ladite tôle, les tôles étant réparties en deux groupes de tôles, les tôles de chaque groupe étant parallèles entre elles, les tôles d'un groupe étant perpendiculaires aux tôles de l'autre groupe, les encoches de chaque groupe de tôles étant remplies par des tôles de l'autre groupe. Les deux groupes de tôles forment alors un quadrillage à la surface de formage, c'est-à-dire une multiplicité de quadrilatère formant les cavités de la forme alvéolaire selon l'invention. Il est possible d'exercer une force pneumatique (soufflage ou aspiration) au travers de ces cavités.

La forme selon l'invention sert au formage d'une feuille de verre ou de plusieurs feuilles de verre superposées (généralement deux). Les feuilles bombées peuvent ensuite être trempées ou assemblées dans un vitrage feuilleté, notamment pour constituer un vitrage automobile, de porte latéral ou de pare-brise, voire de lunette arrière.

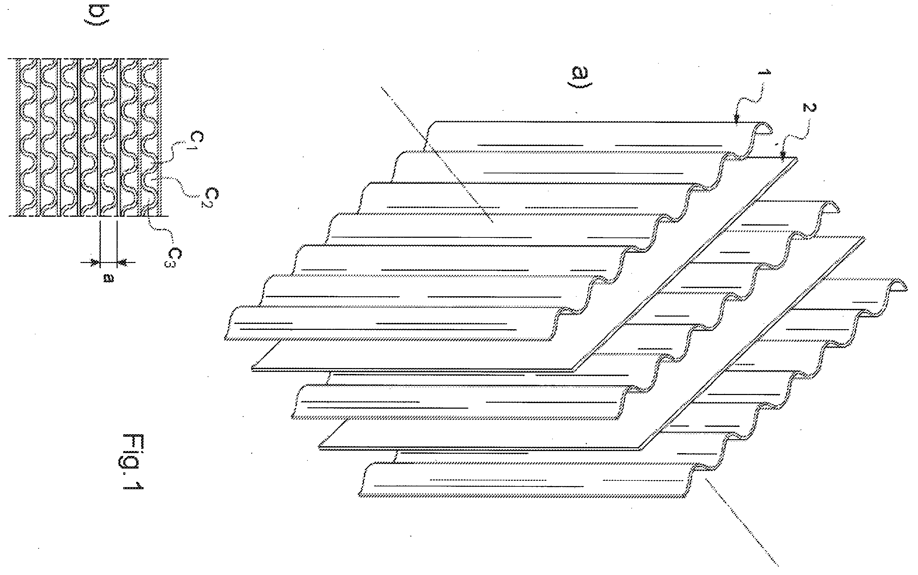

La figure 1 illustre comment on peut réaliser un outil de bombage selon l'invention par assemblage de tôles métalliques de formes différentes. Sur la figure 1 a, on a alterné des tôles ondulés 1 avec des tôles planes 2. Ces tôles de formes différentes ont leurs directions générales parallèles. La tôle ondulée avait une amplitude (a) de 5 mm. Les deux types de tôles avaient une épaisseur de 0,4 mm. On les a ensuite juxtaposées et brasées pour former un bloc. On obtient ainsi une surface comme représentée à la figure 1 b. Cette surface doit encore être façonnée à la forme de bombage souhaitée. Cette surface comprend un réseau métallique formé par les tranches des tôles à la surface de formage, ledit réseau entourant une multiplicité de cavités c1, c2, c3, etc qui forment autant d'espaces exempts de toute matière condensée. Selon cette structure, des alvéoles traversent toute la forme de bombage de la surface de formage jusqu'au fond de la forme. On pourrait réaliser une structure sensiblement équivalente en accolant des profilés métalliques comme des tubes métalliques les uns aux autres. Dans le cas d'utilisation de tubes, une partie des cavités auraient alors la forme de cercles. Cette surface peut être recouverte par un intercalaire, mince tissu ou feutre, de façon bien connue de l'homme du métier pour entrer en contact avec le verre à bomber.

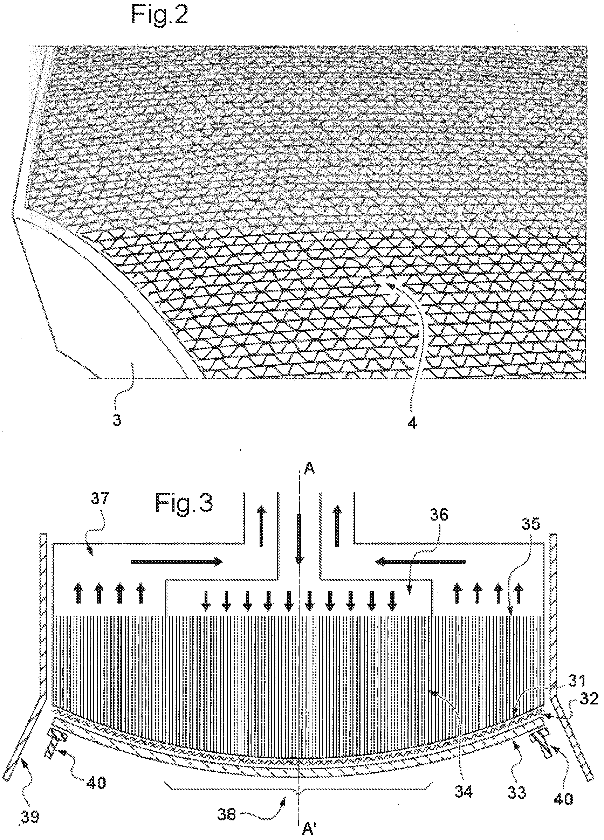

La figure 2 représente une vue partielle d'une forme pleine de bombage selon l'invention. On distingue l'assemblage 4 fait d'une alternance de tôles ondulées et de tôles planes formant des alvéoles tubulaires. Cet assemblage est entouré d'une ceinture métallique 3 faisant le tour des côtés latéraux de la forme. La tranche de cette ceinture peut faire partie, au moins partiellement, de la surface de formage totale. Ici, la surface de formage totale comprend la surface de formage du matériau alvéolaire additionnée de la surface de formage de la tranche de la ceinture métallique.

La figure 3 représente schématiquement la section d'une forme « pleine » de bombage selon l'invention vu de côté et compartimentée en différentes régions d'aspiration et de soufflage. Cette forme est dite pleine car elle agit sur l'essentiel de la surface de la feuille de verre et notamment sa région centrale 38. La forme de bombage comprend une surface de formage 31, laquelle est habillée d'un matériau fibreux 32 en feutre de fibres réfractaires pour adoucir le contact avec la feuille de verre 33. Les alvéoles 34 de la forme de bombage sont tubulaires et la direction longitudinale de ces tubes est parallèle à l'axe vertical AA' et sensiblement orthogonale à la surface de formage 31. On a aisément créé deux régions indépendantes de soufflage ou d'aspiration simplement en partitionnant le côté 35 de la forme de bombage opposé à la surface 31 de bombage. Les conduits 34 communiquent vers la surface de formage 31 la pression gazeuse (d'aspiration ou de soufflage) commandée du côté 35. On a ainsi créé un caisson central 36 représenté en soufflage vers le centre 38 du verre 33 (mais pouvant aussi fonctionner en aspiration) et un caisson périphérique 37 représenté en aspiration de la périphérie du verre (mais pouvant aussi fonctionner en soufflage). On a également représenté une jupe 39 pouvant créer une aspiration en périphérie de la feuille de verre. On a également représenté une contreforme 40 du type cadre pouvant presser le verre en périphérie. La partie de la surface de la forme de bombage venant directement en face de la contreforme 40 pourrait avantageusement être exempt de cavité, c'est-à-dire 100% solide, afin d'éviter tout marquage. En effet, le verre en sa zone périphérique subit la plus forte pression puisqu'il est compressé entre deux formes solides. La forme de bombage pourrait donc être munie d'une couronne métallique sans cavité en périphérie seulement, dont la surface ferait partie intégrante de la surface de bombage 31 et viendrait en continuité de la partie de la surface de bombage munie de cavités.

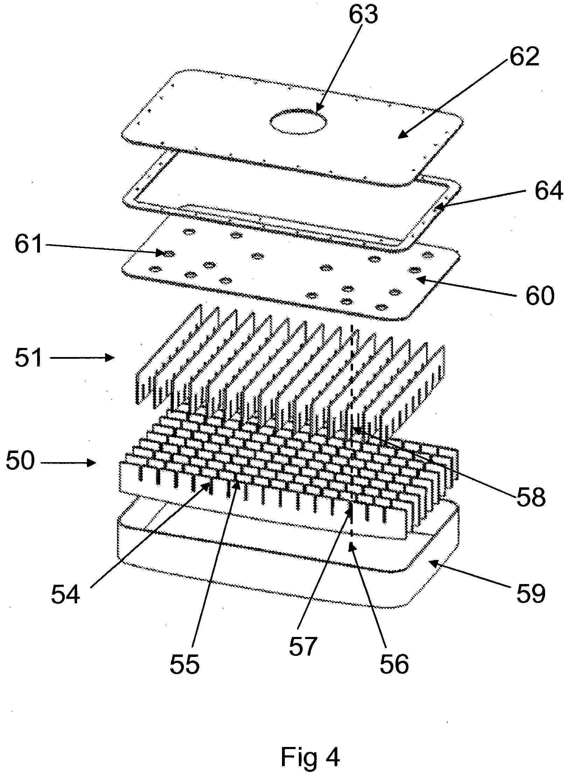

La figure 4 représente une vue éclatée des différents constituants d'une forme de bombage construite par croisement de tôles en forme de peigne. Deux groupes de peignes 50 et 51 sont enchâssés les uns dans les autres. Chaque peigne est constitué d'une plaque (ou tôle) plane munie d'une série d'encoches 54 parallèles entre elles et entaillant toutes le même bord 55 de la plaque, perpendiculairement audit bord sans traverser toute la largeur de la plaque. L'épaisseur de l'encoche correspond sensiblement à l'épaisseur de la plaque. En effet, l'encoche d'un peigne d'un groupe est destinée à recevoir un peigne de l'autre groupe. Dans chaque groupe de peigne, tous les peignes sont parallèles entre eux. Les deux groupes de peignes (50, 51) sont perpendiculaires entre eux. Pour les enchâsser, on peut procéder ainsi : on place les peignes d'un premier groupe 50, parallèles entre eux avec leurs encoches 54 placées du même côté (vers le haut pour le groupe 50 de la figure 4). On place ensuite les peignes du deuxième groupe les uns après les autres en venant les emboîter dans les peignes du premier groupe. Les peignes s'enchâssent par leurs bords comprenant les encoches. Les axes 56 des encoches des peignes d'un groupe 50 se confondent avec les axes des encoche 58 des peignes de l'autre groupe 51. Une fois enchâssés les uns dans les autres, l'assemblage des peignes peut être soudé. La surface de bombage de la forme de bombage comprend ainsi une multiplicité d'alvéoles en forme de quadrillage. On place généralement l'assemblage à l'intérieur d'une ceinture métallique 59. Il est possible de procurer un soufflage ou une aspiration au travers des alvéoles de l'assemblage. On peut influer sur la répartition de cette force pneumatique en disposant une tôle de répartition 60 au contact de l'assemblage des peignes et du côté opposé à la surface de contact de ladite forme. Cette tôle de répartition comprend des orifices 61 destinés à canaliser la force pneumatique (soufflage ou aspiration) vers les endroits souhaités. La force pneumatique arrive à la forme de bombage par l'intermédiaire de l'orifice 63 d'une tôle de fermeture 62. Une ceinture 64 joue le rôle d'intercalaire entre la tôle de répartition 60 et la tôle de fermeture 62 de façon à permettre à la force pneumatique de bien se répartir au-dessus de la tôle de répartition et ainsi alimenter de manière égale tous les orifices 61 de la tôle de répartition. Après soudage des peignes entre eux ainsi que de la ceinture métallique avec les peignes, on peut usiner le cas échéant la surface de bombage pour la faire correspondre à la forme de bombage souhaitée.

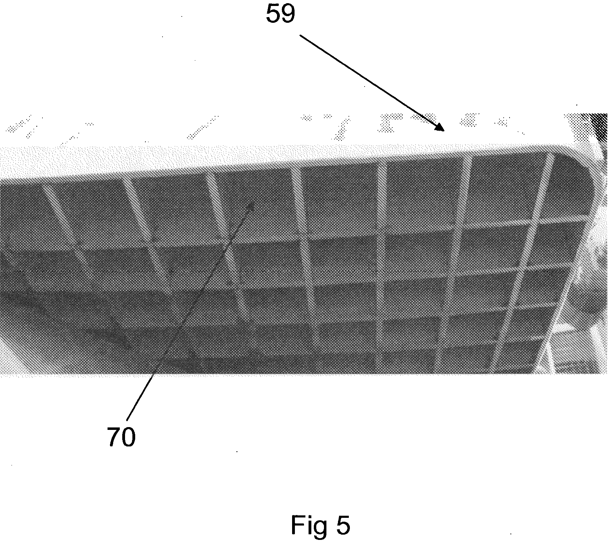

La figure 5 montre une partie de la surface de bombage d'une forme de bombage réalisée conformément à la figure 4. On distingue la ceinture 59 délimitant l'extérieur de la forme de bombage et les alvéoles 70 de forme sensiblement quadratiques en conséquence du croisement à 90° des deux groupes de peignes.

## Revendications

1. Forme pleine de bombage du verre comprenant un matériau solide alvéolaire dont les alvéoles (34, 70) forment des cavités (C1, C2, C3) à la surface de formage, lesdites alvéoles représentant plus de 40% du volume du matériau, lesdites cavités représentant plus de 40% de la surface de formage du matériau alvéolaire, le matériau comprenant des tôles métalliques (1, 2) assemblées de façon non-compacte pour former les alvéoles.

2. Forme selon la revendication précédente, **caractérisé en ce que** les cavités représentent plus de 70% de la surface de formage du matériau alvéolaire.

3. Forme selon l'une des revendications précédentes, **caractérisé en ce que** les alvéoles représentent plus de 70% du volume du matériau.

4. Forme selon l'une des revendications précédentes, **caractérisé en ce que** la surface de formage du matériau alvéolaire représente plus de 70% et même plus de 90% de la surface de formage totale.

5. Forme selon l'une des revendications précédentes **caractérisée en ce que** la surface de formage comprend une multiplicité de tranches de tôles métalliques.

6. Forme selon l'une des revendications précédentes, **caractérisée en ce que** le matériau métallique comprend un assemblage (4) alterné de tôles ondulées et de tôles planes.

7. Forme selon l'une des revendications précédentes, **caractérisée en ce que** aucun cercle de rayon supérieur à 1 cm dans la surface de formage du matériau alvéolaire n'est exempt de matériau solide.

8. Forme selon la revendication précédente, **caractérisée en ce que** aucun cercle de rayon supérieur à 0,5 cm dans la surface de formage du matériau alvéolaire n'est exempt de matériau solide.

9. Forme selon l'une des revendications précédentes **caractérisée en ce que** le cercle de rayon 10 cm compris dans la surface de formage et centré au centre de ladite surface de formage contient au moins 100 cavités.

10. Forme selon l'une des revendications précédentes **caractérisée en ce que** les alvéoles forment des conduits traversant la forme dans une direction sensiblement perpendiculaire à la surface de formage.

11. Dispositif de bombage de feuilles de verre comprenant une forme de bombage de la revendication précédente, le côté opposé (35) à la surface (31) de formage du matériau solide alvéolaire étant compartimenté en différentes régions, et un caisson indépendant d'aspiration ou de soufflage (36, 37) étant relié à chaque région pour communiquer une pression aux alvéoles (34) en forme de conduit débouchant dans ladite région.

12. Procédé de bombage d'une feuille de verre (33) à sa température de bombage avec la forme de l'une des revendications de forme précédentes, un tissu ou non-tissé (32) comprenant une fibre réfractaire étant le cas échéant en position intercalaire entre la feuille de verre (33) et la surface de formage (31).

13. Procédé selon la revendication précédente, **caractérisé en ce que** le verre ne rentre pas dans les cavités au moment du bombage.

14. Procédé selon l'une des revendications de procédé précédentes, **caractérisé en ce que** la surface de formage présente au plus six changements de concavité et chaque face principale de la feuille de verre bombée finale présente au plus six changements de concavité.

15. Procédé selon l'une des revendications de procédé précédentes, **caractérisé en ce que** la forme n'est pas dans un four.

16. Procédé de fabrication d'une forme de bombage de l'une des revendications de forme précédentes comprenant l'assemblage (34) de tôles métalliques de formes différentes disposées parallèlement les unes aux autres pour former un bloc alvéolaire puis l'usinage d'une surface de formage (31) dudit bloc, ladite surface étant disposée sensiblement perpendiculairement aux tôles métalliques.

17. Procédé de fabrication d'une forme de bombage de l'une des revendications de forme précédentes comprenant l'assemblage de tôles métalliques planes, chaque tôle étant en forme de peigne (50, 51) et comprenant des encoches (54) parallèles entre elles et entaillant le même bord (55) de ladite tôle, les tôles étant réparties en deux groupes de tôles (50, 51), les tôles de chaque groupe étant parallèles entre elles, les tôles d'un groupe étant perpendiculaires aux tôles de l'autre groupe, les encoches de chaque groupe de tôles étant remplies par des tôles de l'autre groupe.

18. Procédé selon l'une des deux revendications précédentes, **caractérisé en ce que** les tôles ont une épaisseur dans le domaine de 0,01 à 8 mm.

19. Procédé selon l'une des revendications 16 à 18, **caractérisé en ce que** les alvéoles sont remplies d'une résine avant l'usinage de la surface de formage, la résine étant enlevée après ledit usinage.

## Patentansprüche

1. Massive Form zum Biegen von Glas, die ein wabenförmiges Feststoffmaterial enthält, dessen Waben (34, 70) Vertiefungen (C1, C2, C3) an der Formungsfläche bilden, wobei die Waben mehr als 40 % des Volumens des Materials darstellen, wobei die Vertiefungen mehr als 40 % der Formungsfläche des wabenförmigen Materials darstellen, wobei das Material Metallbleche (1, 2) umfasst, die auf nicht kompakte Weise verbunden sind, um die Waben zu bilden.

2. Form nach dem vorhergehenden Anspruch,
**dadurch gekennzeichnet, dass**
die Vertiefungen mehr als 70 % der Formungsfläche des wabenförmigen Materials darstellen.

3. Form nach einem der vorhergehenden Ansprüche,
**dadurch gekennzeichnet, dass**
die Waben mehr als 70% des Volumens des Materials darstellen.

4. Form nach einem der vorhergehenden Ansprüche,
**dadurch gekennzeichnet, dass**
die Formungsfläche des wabenförmigen Materials mehr als 70% und sogar mehr als 90 % gesamten Formungsoberfläche darstellen.

5. Form nach einem der vorhergehenden Ansprüche,
**dadurch gekennzeichnet, dass**
die Formungsfläche eine Vielheit von Scheiben aus Metallblechen umfasst.

6. Form nach einem der vorhergehenden Ansprüche,
**dadurch gekennzeichnet, dass**
das metallische Material einen alternierenden Verband (4) von Wellblechen und Flachblechen umfasst.

7. Form nach einem der vorhergehenden Ansprüche,
**dadurch gekennzeichnet, dass**
kein Kreisbogen in der Formungsfläche des wabenförmigen Materials, der größer als 1 cm ist, frei von Feststoffmaterial ist.

8. Form nach dem vorhergehenden Anspruch,
**dadurch gekennzeichnet, dass**
kein Kreisbogen in der Formungsfläche des wabenförmigen Materials, der größer als 0,5 cm ist, frei von Feststoffmaterial ist.

9. Form nach einem der vorhergehenden Ansprüche,
**dadurch gekennzeichnet, dass**
der Kreisbogen von 10 cm, der in der Formungsfläche liegt und in der Mitte der Formungsfläche zentriert ist, mindestens 100 Vertiefungen aufweist.

10. Form nach einem der vorhergehenden Ansprüche,
**dadurch gekennzeichnet, dass**
die Waben Kanäle bilden, welche die Form in einer Richtung durchqueren, die zu der Formungsfläche senkrecht ist.

11. Vorrichtung zum Biegen von Glasscheiben, die eine Biegeform nach dem vorhergehenden Anspruch umfasst, wobei die zu der Formungsfläche (31) des wabenförmigen Feststoffmaterials entgegengesetzte Seite (35) in verschiedene Regionen unterteilt ist und wobei ein unabhängiger Ansaug- oder Blaskasten (36, 37) mit jeder Region verbunden ist, um einen Druck zu den die kanalförmigen Waben (34), die in der Region ausmünden, zu leiten.

12. Verfahren zum Biegen einer Glasscheibe (33) bei ihrer Biegetemperatur mit der Form eines der vorhergehenden Formansprüche, wobei ein Gewebe oder Vlies (32), das eine feuerfeste Faser enthält, gegebenenfalls in Zwischenposition zwischen der Glasscheibe (33) und der Formungsfläche (31) ist.

13. Verfahren nach dem vorhergehenden Anspruch,
**dadurch gekennzeichnet, dass**
das Glas zum Zeitpunkt des Biegens nicht in die Vertiefungen eintritt.

14. Verfahren nach einem der vorhergehenden Verfahrensansprüche,
**dadurch gekennzeichnet, dass**
die Formungsfläche höchstens sechs Änderungen in der Konkavität aufweist und jede Hauptfläche der finalen gebogenen Glasscheibe höchstens sechs Änderungen in der Konkavität aufweist.

15. Verfahren nach einem der vorhergehenden Verfahrensansprüche,
**dadurch gekennzeichnet, dass**
die Form nicht in einem Ofen ist.

16. Verfahren zum Herstellen einer Biegeform nach einer der vorhergehenden Formansprüche, welches das Verbinden (34) von Metallblechen unterschiedlicher Formen, die zu einander parallel angeordnet sind, um einen wabenförmigen Block zu bilden, und dann das Bearbeiten einer Formungsfläche (31) des Blocks umfasst, wobei die Fläche zu den Metallblechen im Wesentlichen senkrecht angeordnet ist.

17. Verfahren zum Herstellen einer Biegeform nach einer der vorhergehenden Formansprüche, welches das Verbinden von flachen Metallblechen umfasst, wobei jedes Blech die Form eines Kamms (50, 51) aufweist und Einkerbungen (54) umfasst, die zu einander parallel sind und den gleichen Rand (55) des Blechs einkerben, wobei die Bleche in zwei Gruppen von Blechen (50, 51) aufgeteilt sind, wobei die Bleche jeder Gruppe parallel zu einander sind, wobei die Bleche einer Gruppe zu den Blechen der anderen Gruppe senkrecht sind, wobei die Einkerbungen jeder Gruppe von Blechen durch Bleche der anderen Gruppe gefüllt sind.

18. Verfahren nach einem der zwei vorhergehenden Ansprüche,
**dadurch gekennzeichnet, dass**
die Bleche eine Dicke im Bereich von 0,01 bis 8 mm haben.

19. Verfahren nach einem der Ansprüche 16 bis 18,
**dadurch gekennzeichnet, dass**
die Waben vor dem Bearbeiten der Formungsfläche mit einem Harz gefüllt sind, wobei das Harz nach dem Bearbeiten entnommen wird.

## Claims

1. A full mold for bending glass, comprising a cellular solid material the cells (34,70) of which form cavities (C1, C2, C3) in the molding area, said cells representing more than 40% of the volume of the material, said cavities representing more than 40% of the molding area of the cellular material, the material comprising metal sheets (1, 2) assembled in a non-compact way to form the cells.

2. The mold as claimed in the preceding claim, **characterized in that** the cavities represent more than 70% of the molding area of the cellular material.

3. The mold as claimed in one of the preceding claims, **characterized in that** the cells represent more than 70% of the volume of the material.

4. The mold as claimed in one of the preceding claims, **characterized in that** the molding area of the cellular material represents more than 70% and even more than 90% of the total molding area.

5. The mold as claimed in one of the preceding claims, **characterized in that** the molding area comprises a multiplicity of metal-sheet edge faces.

6. The mold as claimed in one of the preceding claims, **characterized in that** the metal comprises an alternating assembly (4) of corrugated sheets and flat sheets.

7. The mold as claimed in one of the preceding claims, **characterized in that** no circle of radius greater than 1 cm on the molding area of the cellular material is exempt from solid material.

8. The mold as claimed in the preceding claim, **characterized in that** no circle of radius greater than 0.5 cm on the molding area of the cellular material is exempt from solid material.

9. The mold as claimed in one of the preceding claims, **characterized in that** the circle of 10 cm radius lying on the molding area and centered on the center of said molding area contains at least 100 cavities.

10. The mold as claimed in one of the preceding claims, **characterized in that** the cells form ducts passing through the mold in a direction substantially perpendicular to the molding area.

11. A device for bending glass panes comprising a bending mold according to the preceding claim, the side (35) opposite the molding area (31) of the cellular solid material being compartmentalized in various regions, and an independent box (36, 37) for providing suction or blow being connected to each region in order that pressure may be applied to the cells (34) having the form of ducts opening onto said region.

12. A process for bending a glass pane (33) at its bending temperature with the mold of one of the preceding mold claims, a woven or a nonwoven (32) comprising refractory fibers being, if required, in an intermediate position between the glass pane (33) and the molding area (31).

13. The process as claimed in the preceding claim, **characterized in that** the glass does not enter the cavities during the bending.

14. The process as claimed in either one of the preceding process claims, **characterized in that** the molding area has at most six changes in concavity and each main face of the final curved glass pane has at most six changes in concavity.

15. The process as claimed in one of the preceding process claims, **characterized in that** the mold is not contained in a furnace.

16. A process for manufacturing a bending mold of one of the preceding mold claims, comprising the assembly (34) of metal sheets of different shapes placed parallel to one another so as to form a cellular unit, then the machining of one molding area (31) of said unit, said area being placed substantially perpendicular to the metal sheets.

17. The process for manufacturing a bending mold of one of the preceding mold claims, comprising the assembly of flat metal sheets, each sheet having a comb shape (50) and comprising notches (54) that are parallel to one another and cut from the same edge (55) of said sheet, the sheets being split into two groups of sheets (50,51), the sheets of each group being parallel to one another, the sheets of one group being perpendicular to the sheets of the other group, the notches of each group of sheets being filled by the sheets of the other group.

18. The process as claimed in one of the two preceding claims, **characterized in that** the sheets have a thickness ranging from 0.01 to 8 mm.

19. The process as claimed in one of claims 16 to 18, **characterized in that** the cells are filled with a resin before machining of the molding area, the resin being removed after said machining.
